# EUROPÄISCHE PATENTSCHRIFT

(11) **EP 2 158 038 B1**
(45) Veröffentlichungstag und Bekanntmachung des Hinweises auf die Patenterteilung: **13.03.2019**
(21) Anmeldenummer: 08758690.5
(22) Anmeldetag: 21.05.2008
(51) Int. Cl.: B01J 29/064

(54) **METALLDOTIERTER ZEOLITH UND VERFAHREN ZU DESSEN HERSTELLUNG**
METAL DOPED ZEOLITE AND METHOD FOR PRODUCTION THEREOF
ZÉOLITHE DOPÉ EN METAL ET PROCÉDÉ DE PRODUCTION ASSOCIÉ

(30) Priorität: 24.05.2007 DE 102007024125; 24.05.2007 DE 102007063604
(43) Veröffentlichungstag der Anmeldung: 03.03.2010
(73) Patentinhaber: Süd-Chemie IP GmbH & Co. KG, 81925 München (DE)
(72) Erfinder: ALTHOFF, Roderik, 83024 Rosenheim (DE); TISSLER, Arno, 93105 Tegernheim (DE); TOUFAR, Helge, 06844 Dessau (DE)
(74) Vertreter: Kuba, Stefan
(86) Internationale Anmeldenummer: PCT/EP2008/004089
(87) Internationale Veröffentlichungsnummer: WO 2008/141823

(56) Entgegenhaltungen:
- US-A- 5 451 387
- G.D. PIRNGRUBER, P.K. ROY, R.PRINS: "On determining the nuclearity of iron sites in Fe-ZSM-5 - a critical evaluation" PHYSICAL CHEMISTRY CHEMICAL PHYSICS, Bd. 8, 2006, Seiten 3939-3950, XP002505723
- BATTISTON A A ET AL: "Reactivity of binuclear Fe complexes in over-exchanged Fe/ZSM5, studied by in situ XAFS spectroscopy 2. Selective catalytic reduction of NO with isobutane" JOURNAL OF CATALYSIS, ACADEMIC PRESS, DULUTH, MN, US, Bd. 218, Nr. 1, 15. August 2003 (2003-08-15), Seiten 163-177, XP004432704 ISSN: 0021-9517
- N.HANSEN, A. HEYDEN, A.T.BELL, F.J.KEIL: "A Reaction Mechanism for the Nitrous Oxide Decomposition on Binuclear Oxygen Bridged Iron Sites in Fe-ZSM-%" JOURNAL OF PHYSICAL CHEMISTRY, Bd. 111, Nr. 5, 8. Februar 2007 (2007-02-08), Seiten 2092-2101, XP002505724

## Beschreibung

Die vorliegende Erfindung betrifft ein Verfahren zur Herstellung eines metallausgetauschten Zeolithen mit der Topologie BEA, MFI, FER, MOR oder MTW, bei dem das eingetauschte Metall im Zeolithen als monomere und/oder als dimere Spezies vorliegt, wobei zunächst in einem verschließbaren Reaktionsgefäß eine wässrige Aufschlämmung eines Zeolithen hergestellt wird, weiter umfassend die Schritte des
a) Erhöhens des pH-Werts der Aufschlämmung auf einen Wert im Bereich von 8 bis 10 und Einstellens des Sauerstoffgehalts im Reaktionsgefäß auf einen Wert von < 10 %,
b) Erniedrigens des pH-Werts auf einen Wert im Bereich von 1,5 bis 6,
c) Zugebens eines Metallsalzes und Umsetzens über einen Zeitraum von 1 bis 15 Stunden,
d) Abfiltrierens und Waschens des metallausgetauschten Zeolithen;
wobei die monomeren und/oder dimeren Spezies des eingetauschten Metalls in Form einzelner oder dimerer Metallatome oder Metallkationen vorliegen und nicht als "ship-in-a-bottle" zeolithische Wirt-Gast-Komplexe vorliegen; und
wobei der Sauerstoffgehalt in dem Reaktionsgefäß während der Reaktion <10 % beträgt.

Die vorliegende Erfindung betrifft auch einen durch das erfindungsgemäße Verfahren erhältlichen metallausgetauschten Zeolithen bei dem das Metall als monomere und/oder dimere Spezies vorliegt sowie die Verwendung des metallausgetauschten Zeolithen als Katalysatormaterial, insbesondere für die Reinigung von Abgasen, ganz besonders für die Reduktion von Stickoxiden.

Metalldotierte Zeolithe sind aus dem Stand der Technik bekannt und finden weite Verwendung als Katalysatormaterial für die Reinigung von Abgasen.

Aufgrund der schädlichen Auswirkung von Stickoxidemissionen auf die Umwelt ist es ein wichtiges Anliegen, diese Emissionen weiter zu verringern. Deutlich tiefere NOₓ-Emissionsgrenzwerte für stationäre und KFZ Abgase als heutzutage üblich sind in den Vereinigten Staaten in naher Zukunft vorgesehen und werden auch in der Europäischen Union diskutiert.

Um diese Grenzwerte einhalten zu können, kann im Fall von mobilen Verbrennungsmotoren (Dieselmotoren) dies nicht mehr durch innermotorische Maßnahmen erfüllt werden, sondern nur noch durch eine Abgasnachbehandlung, beispielsweise mit geeigneten Katalysatoren.

Die Entstickung von Verbrennungsgasen wird auch als DeNOₓ bezeichnet. In der Automobiltechnik ist die selektive katalytische Reduktion (SCR) eine der wichtigsten DeNOₓ-Techniken. Als Reduktionsmittel dienen üblicherweise Kohlenwasserstoffe (HC-SCR) oder Ammoniak (NH₃-SCR) bzw. NH₃-Vorläufer wie Harnstoff (Ad-Blue®). Dabei haben sich metallausgetauschte Zeolithe (auch als metalldotierte Zeolithe bezeichnet) als sehr aktive und in einem weiten Temperaturbereich einsetzbare SCR-Katalysatoren erwiesen. Sie sind zumeist ungiftig und produzieren weniger N₂O und SO₃ als die üblichen auf V₂O₅ basierenden Katalysatoren. Insbesondere stellen eisendotierte Zeolithe durch ihre hohe Aktivität und Beständigkeit gegenüber Schwefel unter hydrothermalen Bedingungen gute Alternativen zu den herkömmlich eingesetzten Vanadiumkatalysatoren dar. Übliche Verfahren, Zeolithe mit Metallen zu dotieren, umfassen beispielsweise Methoden wie flüssigen Ionenaustausch, Festphasenionenaustausch, Dampfphasenionenaustausch, mechanisch-chemische Verfahren, Imprägnierungsverfahren und die so genannten Ex-Gerüst-Verfahren.

Das US 5,171,553 offenbart beispielsweise ein Ionenaustauschverfahren in wässriger Lösung wobei als Träger üblicherweise siliziumreiche Zeolithe mit Si/Al-Verhältnissen von über 5 bis ca. 50 verwendet werden.

Probleme ergeben sich insbesondere beim Dotieren bzw. Einbringen von aktiven Komponenten, wie z. B. Eisen, Vanadium, Kobalt und Nickel in den Zeolithen, da oftmals verschiedene Oxidationsstufen dieser katalytisch aktiven Metalle nebeneinander vorliegen und auch nicht immer die gewünschten katalytisch aktiven Spezies erhalten wird bzw. die katalytisch aktiven Spezies sich aufgrund der Parameter des Dotierungsverfahrens (Sauerstoff, Temperatur, Feuchtigkeit, etc.) zu katalytisch inaktiven Spezies umwandeln.

Bekannt ist das Dotieren von Zeolithen mit Eisen durch Festkörperionenaustausch (EP 0 955 080 B1), wobei eine Mischung aus dem gewünschten Zeolith, einer Metallverbindung und einer Ammoniumverbindung unter Schutzgasatmosphäre, insbesondere reduktiver Schutzgasatmosphäre, gesintert wird, so dass metallhaltige, insbesondere eisendotierte, Katalysatoren mit einer erhöhten Langzeitstabilität erhalten werden.

Es hat sich jedoch gezeigt, dass bei praktisch sämtlichen bekannten Verfahren des Standes der Technik Cluster-Spezies der katalytisch aktiven Metalle durch den Metallaustausch im innern des Zeolithen entstehen, die katalytisch inaktiv sind, bzw. die katalytische Aktivität extrem herabsetzen. Unter dem Begriff "Cluster" werden dabei mehrkernige verbrückte oder unverbrückte Metallverbindungen verstanden, die mindestens drei gleiche oder verschiedene Metallatome enthalten. Metallausgetauschte Zeolithe, bei denen im Inneren des Zeolithgerüsts keine Metallcluster nachgewiesen werden konnten, sind bislang unbekannt.

Aufgabe der vorliegenden Erfindung war es daher, ein mit den katalytisch aktiven Metallen Fe, Co, Ni, Ag, Cu metallhaltiges Zeolithmaterial mit der Topologie MFI, BEA, FER, MOR oder MTW bereitzustellen, das gegenüber den bisher bekannten metallhaltigen Zeolithmaterialien eine erhöhte katalytische Aktivität aufweist.

Diese Aufgabe wird gelöst durch einen metallausgetauschten Zeolithen mit der Topologie MFI, BEA, FER, MOR oder MTW wobei das eingetauschte Metall ausgewählt aus Fe, Co, Ni, Ag und Cu im Zeolithen als isolierte einzelne Atome bzw. Kationen (monomere Spezies) und/oder als dimere Spezies vorliegt. Der Begriff "metallausgetauscht" bedeutet, dass ein Metall bzw. Metallkation gegen ein im Zeolithen bzw. Zeolithgerüst vorhandenes Kation, typischerweise H⁺, Na⁺, NH₄⁺ etc. eingetauscht wird.

Der erfindungsgemäße metallausgetauschte Zeolith (vorliegend auch synonym als Metall-dotierter Zeolith bezeichnet) ist frei von katalytisch inaktiven bzw. katalytisch weniger aktiven Metallclustern, so dass nur monomere (isolierte Spezies in Form einzelner Metallatome bzw. Metallkationen) oder dimere katalytisch hochaktive Metallspezies in der Porenstruktur d.h. genauer in dem Zeolith-Gerüst vorliegen. Die Metallspezies können anders gesagt auch als "Gerüstmetallspezies" bezeichnet werden. Wichtig ist, dass unter dem Begriff "monomere bzw. dimere Spezies" erfindungsgemäß keine sogenannten "ship-in-a-bottle" zeolithischen Wirt-Gast-Komplexe verstanden werden, wie sie z.B. in dem US 5,603,914 bzw. in S. Chavan et al. J. Catalysis 192, S. 286-295 (2000) für in den Zeolithporen eingeschlossene Cobaltcyclopentadienyl bzw. dimeres Kupferacetat beschrieben worden sind.

Die dimeren Metallspezies im erfindungsgemäßen Zeolithen können dabei entweder verbrückt vorliegen (z. B. über 0 bzw. OH Atome verbrückt) oder unverbrückt vorliegen, also eine Metall-Metall-Bindung aufweisen.

Dadurch kann mit wesentlich geringeren Mengen bei der Metalldotierung bzw. beim Metalleintausch (oft auch als Metallbeladung bezeichnet) gearbeitet werden. Des Weiteren ist die Aktivität und Selektivität des erfindungsgemäßen Zeolithen gegenüber den bekannten Zeolithen des Standes der Technik signifikant erhöht. Es wurde gefunden, dass allgemein die erfindungsgemäßen metallausgetauschten Zeolithe gegenüber den mit dem gleichen Metall dotierten bzw. ausgetauschten Zeolithen des Standes der Technik, bei denen, wie vorstehend erläutert, zumeist Metallcluster im Zeolithen vorliegen, eine Aktivitätssteigerung für jedes Metall um ca. 30% bei der Reduktion von NO zu N₂ zeigen. Inaktive Metallcluster erniedrigen darüber hinaus das Porenvolumen und hindern die Gasdiffusion oder führen zu unerwünschten Nebenreaktionen, was vorteilhafterweise durch die erfindungsgemäßen Zeolithe ebenfalls vermieden werden kann.

Unter dem Begriff "Zeolith" wird im Rahmen der vorliegenden Erfindung gemäß der Definition der International Mineralogical Association (D.S. Coombs et al., Can. Mineralogist, 35, 1997, 1571) eine kristalline Substanz aus der Gruppe der Aluminiumsilikate mit Raumnetzstruktur der allgemeinen Formel

Mⁿ⁺ₙ[(AlO₂)ₓ(SiO₂)_{y}]i^{t}H₂O

verstanden, die aus SiO₄/AlO₄⁻Tetraedern bestehen, die durch gemeinsame Sauerstoffatome zu einem regelmäßigen dreidimensionalen Netzwerk verknüpft sind. Das Verhältnis von Si/Al=y/x beträgt immer ≥1 gemäß der so genannten "Löwenstein-Regel", die das benachbarte Auftreten zweier benachbarter negativ geladener AlO₄⁻Tetraeder verbietet. Dabei stehen bei einem geringen Si/Al-Verhältnis zwar mehr Austauschplätze für Metalle zur Verfügung, der Zeolith wird jedoch zunehmend thermisch instabiler.

Die Zeolithstruktur enthält Hohlräume und Kanäle, die für jeden Zeolithen charakteristisch sind. Die Zeolithe werden gemäß ihrer Topologie in verschiedene Strukturen (siehe oben) eingeteilt. Das Zeolithgerüst enthält offene Hohlräume in Form von Kanälen und Käfigen, die normalerweise von Wassermolekülen und extra Gerüstkationen, die ausgetauscht werden können, besetzt sind. Auf ein Aluminiumatom kommt eine überschüssige negative Ladung, die durch diese Kationen kompensiert wird. Das Innere des Porensystems stellt die katalytisch aktive Oberfläche dar. Je mehr Aluminium und je weniger Silizium ein Zeolith enthält, desto dichter ist die negative Ladung in seinem Gitter und desto polarer seine innere Oberfläche. Die Porengröße und Struktur wird neben den Parametern bei der Herstellung (Verwendung bzw. Art von Templaten, pH, Druck, Temperatur, Anwesenheit von Impfkristallen) durch das Si/Al-Verhältnis bestimmt, das den größten Teil des katalytischen Charakters eines Zeolithen bestimmen. Im vorliegenden Fall ist es besonders bevorzugt, wenn das Si/Al Verhältnis eines erfindungsgemäßen Zeolithen im Bereich von 10 bis 20 liegt (entspricht einem Verhältnis von SiO₂/Al₂O₃ von 20 - 40). Bei Flüssigaustauschverfahren zur Herstellung von metalldotierten bzw. - ausgetauschten Zeolithen besteht eine starke Affinität zum Eintausch mehrwertiger und schwerer Metallkationen gegen leichtere und insbesondere gegen Wasserstoff und/oder NH₄⁺.

Bei den hydratisierten Zeolithen erfolgt die Dehydratisierung meistens bei Temperaturen unterhalb von etwa 400 °C und ist zum größten Teil reversibel.

Durch die Anwesenheit von 2- oder 3-wertigen Kationen als Tetraederzentrum im Zeolithgerüst erhält der Zeolith eine negative Ladung in Form von so genannten Anionenstellen, in deren Nachbarschaft sich die entsprechenden Kationenpositionen befinden. Die negative Ladung wird durch den Einbau von Kationen, z.B. Metallkationen in die Poren des Zeolithmaterials kompensiert. Die Zeolithe unterscheidet man hauptsächlich nach der Geometrie der Hohlräume, die durch das starre Netzwerk der SiO₄/AlO₄-Tetraeder gebildet werden. Die Eingänge zu den Hohlräumen werden von 8, 10 oder 12 "Ringen" gebildet (eng-, mittel- und weitporige Zeolithe). Bestimmte Zeolithe zeigen einen gleichförmigen Strukturaufbau (z. B. ZSM-5 mit MFI-Topologie) mit linearen oder zickzackförmig verlaufenden Kanälen, bei anderen schließen sich hinter den Porenöffnungen größere Hohlräume an

Erfindungsgemäß werden Zeolithe mit den Topologien BEA, MFI, FER, MOR oder MTW verwendet.

Typischerweise wird der Metallgehalt bzw. der Austauschgrad eines Zeolithen maßgeblich durch die im Zeolithen vorliegende Metallspezies bestimmt. Dabei kann der Zeolith sowohl nur mit einem Metall oder mit unterschiedlichen Metallen dotiert bzw. ausgetauscht sein.

Es gibt in Zeolithen üblicherweise drei verschiedene Zentren, die als so genannte α-, β- und γ-Positionen bezeichnet werden, die die Position der Austauschplätze (auch als "austauschbare Positionen bzw. Stellen" bezeichnet) definieren. Alle diese drei Positionen sind für Reaktanden während der NH₃-SCR-Reaktion zugänglich, insbesondere beim Einsatz von Zeolithen mit der MFI, BEA, FER, MOR oder MTW Topologie.

Die so genannten α-Typ-Kationen zeigen die schwächste Bindung zum Zeolithgerüst und werden bei einem flüssigen Ionenaustausch zuletzt aufgefüllt. Der Besetzungsgrad ist ab einem Austauschgrad von rund 10 % stark steigend mit steigendem Metallgehalt und beträgt insgesamt rund 10 bis 50 % bei einem Austauschgrad bis M/Al=0,5. Kationen an dieser Stelle bilden sehr aktive Redox-Katalysatoren.

Die β-Typ Kationen zeigen hingegen eine mittlere Bindungsstärke zum Zeolithgerüst, die beim Flüssigionenaustausch, insbesondere bei kleinen Austauschgraden, die am meisten besetzte Position darstellen und katalysieren die HC-SCR-Reaktion am effektivsten. Diese Position wird gleich nach der γ-Position aufgefüllt und ihr Besetzungsgrad ist ab einem Austauschgrad von rund 10 % sinkend mit steigenden Metallgehalt und Beträgt rund 50 bis 90 % für einen Austauschgrad bis M/Al=0,5. Im Stand der Technik ist bekannt, dass ab einem Austauschgrad von M/Al>0,56 typischerweise nur noch mehrkernige Metalloxide abgelagert werden.

Die γ-Typ-Kationen sind diejenigen Kationen mit der stärksten Bindung zum Zeolithgerüst und thermisch am stabilsten. Sie sind die beim Flüssigionenaustausch am wenigsten besetzte Position, werden aber zuerst aufgefüllt. Kationen, insbesondere Eisen und Kobalt, an diesen Positionen sind hochaktiv und sind die katalytisch aktivsten Kationen.

Die Metalle (bzw. Metallkationen) für den Austausch bzw. die Dotierung sind katalytisch aktive Metalle wie Fe, Co, Ni, Ag, und Cu, ganz besonders bevorzugt Fe und Cu, die auch verbrückte dimere Spezies bilden, wie sie bei dem erfindungsgemäßen Zeolithen insbesondere bei hohen Austauschgraden hauptsächlich vorliegen.

Insgesamt beträgt die Menge an Metall berechnet als entsprechendes Metalloxid 1 bis 5 Gew.-% bezogen auf das Gewicht des metallausgetauschten Zeolithen. Insbesonders bevorzugt ist, dass mehr als 50 % der austauschbaren Stellen (d.h. α-, β- und γ-Stellen) ausgetauscht sind. Ganz besonders bevorzugt sind mehr als 70 % der austauschbaren Stellen ausgetauscht. Es sollten jedoch immer noch freie Stellen verbleiben, die bevorzugt Brønstedt Säurezentren sind. Dies liegt daran, dass NO sowohl an den ausgetauschten Metallzentren stark absorbiert wird und auch in Ionenaustauschpositionen oder an Brønstedt Zentren des Zeolithgerüsts. Außerdem reagiert NH₃ bevorzugt mit den stark sauren Brønstedt Zentren, deren Anwesenheit somit für eine erfolgreiche NH₃-SCR Reaktion sehr wichtig ist. Die Anwesenheit von freien Restaustauschplätzen und/oder Brønstedt-sauren Zentren und den metallgetauschten Gitterplätzen ist also erfindungsgemäß ganz besonders bevorzugt. Daher ist ein Austauschgrad von 70-90% am meisten bevorzugt. Bei mehr als 90% Austauschgrad wurde eine Aktivitätsminderung bei der Reduktion von NO zu N₂ und der SCR-NH₃ Reaktion beobachtet.

Aufgrund der Gefahr der hydrothermalen Desaktivierung von metallausgetauschten Zeolithen, der eine Dealuminierung und Abwanderung von Metall aus den Ionenaustauschzentren des Zeolithen vorausgeht, ist es bevorzugt, dass die Dotierungsmetalle mit Aluminium möglichst keine stabilen Verbindung bilden, da dadurch eine Dealuminierung begünstigt wird.

Durch die Reaktionsführung, insbesondere durch die pH-Erhöhung und Erniedrigung (die so genannte "pH-Führung" des erfindungsgemäßen Verfahrens), wird erreicht, dass ein hoher Austauschgrad von ca. 70 - 90% erreicht werden kann, ohne dass sich für die Katalyse ungeeignete Metallcluster im metallausgetauschten Zeolith bilden, was mit bislang aus dem Stand der Technik bekannten Verfahren insbesondere im Bereich des Flüssigaustauschs nicht erzielt werden konnte.

Durch die Vorbehandlung, insbesondere mit Ammoniak, wird die Austauschrate und das Ausmaß des Austauschs noch erhöht. Nach Einstellen des Sauerstoffgehalts wird die Reaktionsmischung für ca. 1 bis 60 Minuten gerührt.

Überraschenderweise wurde gefunden, dass auch bei einer Erniedrigung des pH auf einen Wert von 1,5 bis 6 in Schritt b) des erfindungsgemäßen Verfahrens hochausgetauschte Zeolithe (Austauschgrenze ca. 90 %) ohne Metallcluster entstehen, obwohl bislang im Stand der Technik angenommen und auch gefunden wurde, dass sich bei niedrigen pH-Werten bei den meisten der katalytisch aktiven Metalle mehrkernige Hydroxo- bzw. Oxospezies bilden, die katalytisch inaktiv sind.

Durch mehrfaches Wiederholen des erfindungsgemäßen Verfahrens kann der Austausch- bzw. Dotierungsgrad bis auf 100 % der austauschbaren Stellen im Zeolith erhöht werden, wenngleich, wie vorstehend ausgeführt, 90% die bevorzugte Obergrenze darstellt. Es ist ebenso, wenn auch in weniger bevorzugten Ausführungsformen, möglich, dass verschiedene Metalle zum Austausch bzw. Dotieren verwendet werden, indem die Wahl des Metallsalzes in Schritt c) variiert wird. Bevorzugt werden die schon oben angeführten Salze der katalytisch aktiven Metalle wie deren Chloride, Sulfate, Acetate, gemischten Ammonium-Metall-Salze, Nitrate und lösliche Komplexverbindungen verwendet.

Dabei kann das Metallsalz sowohl in fester Form wie auch schon in Form einer Lösung zugegeben werden, wobei wässrige Lösungen aufgrund der leichteren Aufarbeitung bevorzugt sind, jedoch nichts dagegen spricht, dass auch in organischen Lösungsmitteln bzw. Mischungen aus wässrigen bzw. organischen Lösungsmitteln gelöste Metallsalze verwendet werden.

Typischerweise enthält die entstandene Aufschlämmung 5 bis 25 Gew.-% an Zeolithen um eine gute Durchmischung mittels Rühren zu gewährleisten, da höhere Gehalte die Mischung verfestigen lassen.

Die Erhöhung des pH-Wertes erfolgt bevorzugt durch Zugabe einer starken Base, ganz besonders bevorzugt in Form von Ammoniakwasser. Natürlich können auch andere geeignete Basen verwendet werden, wobei Basen wie NaOH oder KOH aufgrund ihrer Tendenz zur Förderung der Bildung von mehrkernigen Hydroxospezies mit den Metallsalzen weniger vorteilhaft sind.

Die Ansäuerung der Aufschlämmung erfolgt typischerweise durch Zugabe einer Mineralsäure wie HCl, H₂SO₄, HNO₃ etc. Bevorzugt wird die Säure verwendet, deren Anion ebenfalls das Anion des entsprechenden Metallsalzes ist, das anschließend hinzugegeben wird. HCl ist aber aufgrund seiner hohen Korrosivität bei der Abwasserreinigung weniger bevorzugt.

Ganz besonders bevorzugt wird dadurch der pH-Wert auf einen Bereich von 1,5 bis 3 abgesenkt, was wie schon vorstehend ausgeführt im Gegensatz zum Stand der Technik überraschenderweise nicht zu mehrkernigen hydroxoverbrückten Metallclusterspezies führt.

Nach der Ansäuerung der Aufschlämmung wird zunächst auf eine Temperatur im Bereich von 80 bis 100 °C erwärmt und für ca. 2 Stunden gerührt. Die erhöhte Temperatur während des Ionenaustauschs führt vorteilhafterweise dazu, dass die Hydratsphäre der Metallionen verkleinert wird und so der Austausch beschleunigt wird.

Wichtig ist im Rahmen des erfindungsgemäßen Verfahrens, dass der Sauerstoffgehalt im Reaktionsgefäß während der Reaktion <10 und ganz bevorzugt < 5 % beträgt, da hier ebenfalls die Bildung von mehrkernigen sauerstoff- bzw. hydroxoverbrückten Metallspezies unterdrückt wird.

Die Reaktionszeit für den Metallaustausch beträgt ca. 2 bis 8 Stunden, ganz besonders bevorzugt 3 bis 5 Stunden. Das nach Reaktion und Dotierung erhaltene Pulver wird abfiltriert gewaschen, ggf. bei mehr als 100 °C getrocknet, wobei die Temperatur beim Trocknen von 250 °C nicht überschritten werden soll, da dies ansonsten zur partiellen Kalzinierung führt.
Eine Kalzinierung kann in einem Bereich von 400 bis 600 °C, ganz bevorzugt unter Inertgas durchgeführt werden.

Üblicherweise kann jedes beliebige vorstehend erwähnte Metallsalz verwendet werden, egal ob das Metall in einer zwei-, drei- oder vierwertigen Oxidationsstufe vorliegt, da sich üblicherweise bei der Kalzinierung ein Gleichgewicht der Redoxpaare einstellt. Ganz besonders bevorzugt sind jedoch die zweiwertigen Salze, insbesondere im Fall von Eisensalzen, da diese typischerweise weniger zur Ausfällung von schwer löslichen Metallhydroxiden und Blockierung der Zeolithporen neigen. Bei höherwertigen Eisensalzen sollte die Austauschzeit daher nicht zu lange gewählt werden, weil dadurch auch mehr Hydroxide ausfallen.

Der mittels des erfindungsgemäßen Verfahrens hergestellte Zeolith findet typischerweise Verwendung bei der Reinigung von Abgasen, insbesondere bei der Reduktion von Stickoxiden.

Die Erfindung ist nachstehend anhand von Ausführungsbeispielen näher erläutert, ohne dass diese als einschränkend verstanden werden sollen.

### Allgemeines:

An den erfindungsgemäß erhaltenen Zeolithen wurden mittels eines Perkin-Elmer-UV-VIS Spektrometers mit diffuser Reflexion und BaSO₄ als Referenz UV-VIS-MIR diffuse Reflexionsmessungen durchgeführt. Die Auswertung der Absorptionsintensitäten erfolgte gemäß der Schuster-Kubelka-Munk Gleichung (oft auch als Kubelka Munk Theorie bezeichnet).

### Beispiel 1

### Herstellung eines Eisen-ausgetauschten (bzw. dotierten) Zeolithen

2 g NH₄-ZSM5 (alternativ wurden auch H-ZSM5 oder Na-ZSM5 verwendet) wurden in einem Mengenanteil von 10 bis 15 Gew.-% bezogen auf die wässrige Lösung in einer wässrigen Lösung aufgeschlämmt und bei Raumtemperatur gerührt. Anschließend wurde Ammoniak in Form von Ammoniakwasser in einem Verhältnis von NH₃ zu Zeolith von 0,04 zugegeben, so dass ein pH von > 9 eingestellt wurde. Der pH-Wert betrug dabei maximal 10.

Anschließend wurde das Reaktionsgefäß geschlossen, mit Inertgas gespült und die Atmosphäre im Inneren des Gefäßes auf einen Sauerstoffgehalt von < 5 % eingestellt und für 20 min. gewartet.

Anschließend wurde Schwefelsäure in Form von verdünnter Schwefelsäurekonzentration (25 Vol.-%) zugegeben, wobei das Verhältnis von Schwefelsäure zu Zeolith 0,05 betrug. Der Sauerstoffgehalt wurde bei < 5 % belassen und ein pH-Wert von 4,0 eingestellt. Anschließend wurde die angesäuerte Aufschlämmung auf eine Temperatur von 90 °C erhitzt und danach sofort festes FeSO₄·7 H₂O in einem Gewichtsverhältnis von FeSO₄:7 H₂0 zu Zeolith von 0,2 zugegeben. Der pH-Wert betrug dabei 3 und die Umsetzung wurde über 8 Stunden unter Rühren bei einem Sauerstoffgehalt von weniger als 5 % im Reaktionsgefäß durchgeführt.

Anschließend wurde der ausgetauschte Zeolith, der eine nahezu weiße Farbe aufwies, gefiltert und drei Mal mit destilliertem Wasser gewaschen und bei 150 °C getrocknet. Eine Kalzinierung erfolgte unter Inertgas bei 500 °C über 3 Stunden.

Das entstandene Produkt wies 1,5 Gew.-% Fe₂O₃ bezogen auf die Gesamtmasse an Zeolith auf.

### UV-VIS Spektrum:

Der so erhaltene eisenausgetauschte Zeolith zeigte keine Banden im Wellenzahlenbereich von 10 - 25.000 cm⁻¹, die mehrkernigen Fe-Cluster (d. h. mehr als 3 Fe-Atome) zugeordnet werden, die bei der SCR-Reaktion nur gering oder gar nicht aktiv sind.

Der erfindungsgemäße eisenausgetauschte Zeolith zeigt hingegen starke Banden im Wellenzahlenbereich von 25.000 bis 30.000 cm⁻¹, die Eisenoxidimeren (Fe-O-Fe) zugeordnet werden, die bei der SCR-Reaktion hochaktiv sind. Ebenso zeigte der in Beispiel 1 erhaltene Zeolith Banden im Wellenzahlenbereich zwischen 30.000 und 50.000 cm⁻¹, die Monomeren, im Zeolithgitter angeordneten Eisenspezies oder insbesondere monomeren FeOH-Spezies zugeordnet werden können, die für die SCR-Reaktion ebenfalls hochaktiv sind.

Ein mittels des in Beispiel 1 erhaltenen erfindungsgemäßen Eisenzeolithen hergestellter Katalysator weist somit keine mehrkernigen katalytisch inaktiven Eisencluster auf.

### Beispiel 2

### Herstellung eines Kobalt-ausgetauschten Zeolithen

Die Umsetzung erfolgte wie in Beispiel 1. Nur wurde an Stelle von Eisensulfat (FeSO₄·7 H₂O) eine entsprechende Menge an Co(NO₃)₂ oder alternativ Co(acac)₂((acac)=Acetylacetonat) eingesetzt. Dabei wurde an Stelle von Schwefelsäure die entsprechende Menge an 0,01 M HNO₃ verwendet.

UV-VIS: 38-45.000 cm⁻¹ (m) (SCR aktive Monomere und dimere Co-Zentren), keine Banden bei 10 bis 15.000 cm⁻¹ (Clusterspezies).

### Beispiel 3

### Herstellung eines Kupfer-ausgetauschten Zeolithen

Die Synthese erfolgte wie in Beispiel 1, nur wurde als Metallsalz eine entsprechende Menge Kupferacetylacetonatlösung verwendet und als Säure ebenfalls 0,01 M HNO₃.

UV-VIS: 37-45.500 cm⁻¹ (m) (SCR aktive Monomere und dimere Co-Zentren), keine Banden bei 10-15.000 cm⁻¹ (Clusterspezies)

### Beispiel 4

### Herstellung eines Silber-ausgetauschten Zeolithen

Die Synthese erfolgte wie in Beispiel 1, nur wurde als Metallsalz AgNO₃ verwendet und als Säure 0,01 M HNO₃.

### Beispiel 5

### Herstellung eines Nickel-ausgetauschten Zeolithen

Die Synthese erfolgte wie in Beispiel 1, nur wurde als Metallsalz Ni(NO₃)₂ verwendet und als Säure 0,01 M HNO₃.

### Beispiel 6

Der in Beispiel 1 erhaltene Katalysator wurde bei der Reduktion von NO zu N₂ getestet.

Dabei wurde der erfindungsgemäß erhaltene Katalysator hydrothermal bei 800 °C für 12 Stunden in einer Atmosphäre mit 10 % Wasserdampf gealtert, anschließend zu Formkörpern gepresst und auf eine Größe von 0,4 bis 0,8 mm gesiebt.

Ebenso wurde ein Vergleichskatalysator, der gemäß dem Beispiel der EP 955 080 B1 erhalten wurde, in gleicher Weise hydrothermal gealtert. Dieser Vergleichskatalysator wurde durch Festkörperionenaustausch erhalten.

Die Abgaszusammensetzung für den Vergleichstest betrug:
NO: 500 ppm
NH₃: 500 ppm
H₂O: 50 Vol.%
SV (space velocity): 80.000
Rest N₂

Die Durchführung der Test erfolgte unter üblichen Testbedingungen.

**Tabelle 1: Umsatz von NO zu N₂**

| Temperatur | Fe-Zeolith Beispiel 1 | Vergleichs-Fe-Zeolith |
|---|---|---|
| 200 °C | 35 % | 24 % |
| 350 °C | 95 % | 88 % |
| 500 °C | 92 % | 88 % |

Wie aus Tabelle 1 ersichtlich ist, ist der Umsatz von NO zu N₂ bei Verwendung eines erfindungsgemäß erhaltenen Katalysators bei 350 °C deutlich erhöht als bei Verwendung eines Vergleichskatalysators aus dem Stand der Technik. Die Temperatur von 350 °C ist in etwa die optimale Temperatur für die vorgenannten DeNOₓ-Verfahren.

Die Aktivitätssteigerung bei 350 °C betrug somit ca. 58 %.

## Patentansprüche

1. Verfahren zur Herstellung eines metallausgetauschten Zeolithen, wobei der Zeolith die Topologie BEA, MFI, FER, MOR oder MTW aufweist und wobei das eingetauschte Metall eines oder mehrere ausgewählt aus der Gruppe bestehend aus Fe, Co, Ni, Cu und Ag ist, bei dem das eingetauschte Metall im Zeolithen als monomere und/oder als dimere Spezies vorliegt, wobei zunächst in einem verschließbaren Reaktionsgefäß eine wässrige Aufschlämmung eines Zeolithen hergestellt wird, weiter umfassend die Schritte des
a) Erhöhens des pH-Werts der Aufschlämmung auf einen Wert im Bereich von 8 bis 10 und Einstellens des Sauerstoffgehalts im Reaktionsgefäß auf einen Wert von < 10 %,
b) Erniedrigens des pH-Werts auf einen Wert im Bereich von 1,5 bis 6,
c) Zugebens eines Metallsalzes und Umsetzens über einen Zeitraum von 1 bis 15 Stunden,
d) Abfiltrierens und Waschens des metallausgetauschten Zeolithen;
wobei die monomeren und/oder dimeren Spezies des eingetauschten Metalls in Form einzelner oder dimerer Metallatome oder Metallkationen vorliegen und nicht als "ship-in-a-bottle" zeolithische Wirt-Gast-Komplexe vorliegen; und wobei der Sauerstoffgehalt in dem Reaktionsgefäß während der Reaktion <10 % beträgt.

2. Verfahren nach Anspruch 1, **dadurch gekennzeichnet, dass** die Aufschlämmung 5 bis 25 Gew.-% an Zeolith enthält.

3. Verfahren nach Anspruch 2, **dadurch gekennzeichnet, dass** die Erhöhung des pH-Werts in Schritt a) durch Zugabe von Ammoniak in Form von Ammoniakwasser erfolgt.

4. Verfahren nach Anspruch 1, **dadurch gekennzeichnet, dass** die Erniedrigung des pH-Werts in Schritt b) durch Zugabe einer Mineralsäure erfolgt.

5. Verfahren nach Anspruch 4, **dadurch gekennzeichnet, dass** nach dem Erniedrigen des pH-Werts die Aufschlämmung auf eine Temperatur im Bereich von 80 bis 100 °C erwärmt wird.

6. Verfahren nach Anspruch 5, **dadurch gekennzeichnet, dass** während der Austauschreaktion in Schritt c) der Sauerstoffgehalt im Reaktionsgefäß auf < 5 % gesetzt wird.

7. Verfahren nach Anspruch 6, **dadurch gekennzeichnet, dass** das Verfahren mehrfach durchgeführt wird.

8. Verfahren nach Anspruch 1, **dadurch gekennzeichnet, dass** der nach Schritt d) gewonnene Zeolith bei einer Temperatur > 100°C getrocknet und der getrocknete Zeolith bei einer Temperatur von 400 bis 600 °C kalziniert wird.

9. Verfahren nach Anspruch 8, **dadurch gekennzeichnet, dass** das Kalzinieren unter Inertgas durchgeführt wird.

10. Metall-ausgetauschter Zeolith, bei dem das Metall als monomere und/oder dimere Spezies vorliegt, erhältlich oder erhalten durch das Verfahren nach einem der vorhergehenden Ansprüche 1 bis 9.

11. Verwendung eines Zeolithen nach Anspruch 10 für die Reinigung von Abgasen, insbesondere für die Reduktion von Stickoxiden.

## Claims

1. Method for producing a metal-exchanged zeolite, where the zeolite has the topology BEA, MFI, FER, MOR or MTW and where the replacement metal is one or more selected from the group consisting of Fe, Co, Ni, Cu and Ag, wherein the replacement metal in the zeolite is present as monomeric species and/or as dimeric species, where first, in a closable reaction vessel, an aqueous suspension of a zeolite is prepared, further comprising the steps of
a) increasing the pH of the suspension to a value in the range from 8 to 10 and setting the oxygen content in the reaction vessel to a value of < 10%,
b) reducing the pH to a value in the range from 1.5 to 6,
c) adding a metal salt and reacting over a period of 1 to 15 hours,
d) filtering off and washing the metal-exchanged zeolite;
where the monomeric and/or dimeric species of the replacement metal are present in the form of individual or dimeric metal atoms or metal cations and are not present as "ship-in-a-bottle" zeolitic host-guest complexes; and
where the oxygen content in the reaction vessel during the reaction is < 10%.

2. Method according to Claim 1, **characterized in that** the suspension comprises 5 to 25 wt% of zeolite.

3. Method according to Claim 2, **characterized in that** the pH is increased in step a) by addition of ammonia in the form of aqueous ammonia.

4. Method according to Claim 1, **characterized in that** the pH is reduced in step b) by addition of a mineral acid.

5. Method according to Claim 4, **characterized in that** after the reduction in the pH, the suspension is heated to a temperature in the range from 80 to 100°C.

6. Method according to Claim 5, **characterized in that** during the exchange reaction in step c), the oxygen content in the reaction vessel is set to < 5%.

7. Method according to Claim 6, **characterized in that** the method is carried out a number of times.

8. Method according to Claim 1, **characterized in that** the zeolite obtained after step d) is dried at a temperature > 100°C and the dried zeolite is calcined at a temperature of 400 to 600°C.

9. Method according to Claim 8, **characterized in that** the calcination is carried out under inert gas.

10. Metal-exchanged zeolite, wherein the metal is present as monomeric species and/or dimeric species, obtainable or obtained by the method according to any of preceding Claims 1 to 9.

11. Use of a zeolite according to Claim 10 for the cleaning of exhaust gases, more particularly for the reduction of oxides of nitrogen.

## Revendications

1. Procédé de fabrication d'un zéolithe à métal échangé, la zéolithe présentant la topologie BEA, MFI, FER, MOR ou MTW, et le métal échangé étant un ou plusieurs choisis dans le groupe constitué par Fe, Co, Ni, Cu et Ag, selon lequel le métal échangé dans la zéolithe se présente sous la forme d'une espèce monomère et/ou d'une espèce dimère, une suspension aqueuse d'une zéolithe étant tout d'abord préparée dans un récipient de réaction pouvant être fermé, comprenant en outre les étapes suivantes :
a) l'élévation du pH de la suspension à une valeur dans la plage allant de 8 à 10 et l'ajustement de la teneur en oxygène dans le récipient de réaction à une valeur < 10 %,
b) la réduction du pH à une valeur dans la plage allant de 1,5 à 6,
c) l'ajout d'un sel métallique et la mise en réaction pendant une durée de 1 à 15 heures,
d) la filtration et le lavage de la zéolithe à métal échangé ;
les espèces monomères et/ou dimères du métal échangé se présentant sous la forme d'atomes métalliques individuels ou dimères ou de cations métalliques, et ne se présentant pas sous la forme de complexes hôte-invité zéolitiques « ship-in-a-bottle » ; et la teneur en oxygène dans le récipient de réaction pendant la réaction étant < 10 %.

2. Procédé selon la revendication 1, **caractérisé en ce que** la suspension contient 5 à 25 % en poids de zéolithe.

3. Procédé selon la revendication 2, **caractérisé en ce que** l'élévation du pH à l'étape a) a lieu par ajout d'ammoniac sous la forme d'eau ammoniaquée.

4. Procédé selon la revendication 1, **caractérisé en ce que** la réduction du pH à l'étape b) a lieu par ajout d'un acide minéral.

5. Procédé selon la revendication 4, **caractérisé en ce qu'**après la réduction du pH, la suspension est portée à une température dans la plage allant de 80 à 100 °C.

6. Procédé selon la revendication 5, **caractérisé en ce que**, pendant la réaction d'échange à l'étape c), la teneur en oxygène dans le récipient de réaction est fixée à < 5 %.

7. Procédé selon la revendication 6, **caractérisé en ce que** le procédé est réalisé à plusieurs reprises.

8. Procédé selon la revendication 1, **caractérisé en ce que** la zéolithe obtenue après l'étape d) est séchée à une température > 100 °C et la zéolithe séchée est calcinée à une température de 400 à 600 °C.

9. Procédé selon la revendication 8, **caractérisé en ce que** la calcination est réalisée sous gaz inerte.

10. Zéolithe à métal échangé, dans laquelle le métal se présente sous la forme d'une espèce monomère et/ou dimère, pouvant être obtenue ou étant obtenue par le procédé selon l'une quelconque des revendications 1 à 9 précédentes.

11. Utilisation d'une zéolithe selon la revendication 10 pour la purification de gaz d'échappement, notamment pour la réduction d'oxydes d'azote.
